# EUROPÄISCHE PATENTANMELDUNG

(11) **EP 3 176 763 A1**
(43) Veröffentlichungstag der Anmeldung: **07.06.2017**
(21) Anmeldenummer: 16202047.3
(22) Anmeldetag: 02.12.2016
(51) Int. Cl.: G07F 11/62, G07F 9/02, G07F 7/06, G07F 17/00, G07F 17/12, B65G 1/00

(54) **VORRICHTUNG UND EIN VERFAHREN ZUR EIN- UND AUSGABEKONTROLLE**

(30) Priorität: 04.12.2015 DE 102015121181
(71) Anmelder: Apfel GmbH, 69221 Dossenheim (DE)
(72) Erfinder: Apfel, Stefan, 69221 Dossenheim (DE)
(74) Vertreter: Hamel, Armin

(57) **Zusammenfassung**

Die Erfindung betrifft eine Vorrichtung zur Ein- und Ausgabekontrolle für auf oder in Lagergutträgern (1) gelagertes Gut, insbesondere unterschiedlicher Abmessungen, in Lagersystemen (2) zur automatisierten Lagerbestandsführung, wobei oberhalb oder vor einer Beschickungs- und/oder Entnahmeöffnung (3) wenigstens eine fest installierte den Lagergutträger automatisch erfassende Kamera (24) vorgesehen ist und/oder ein den Lagergutträger (1) abdeckendes Kontrolltablar (4) mit einer Vielzahl von ver- und entriegelbaren Verschlüssen (5) vorgesehen ist, die von einer Steuerung (6) selektiv ansteuerbar sind.

## Beschreibung

Die Erfindung betrifft eine Vorrichtung und ein Verfahren zur Ein- und Ausgabekontrolle für auf oder in Lagergutträgern gelagertes Gut und ein automatisches Lagersystem.

Werkzeuge und Werkzeugsätze werden zum Zwecke von Wartung, Reparatur, Fertigung und dergleichen eingesetzt. Die Werkzeuge werden üblicherweise in Werkzeugkästen oder Werkbanksystemen aufbewahrt. Insbesondere in sicherheitsrelevanten Bereichen, wie in der Luft- und Raumfahrt, ist es wichtig, dass nach Abschluss von Arbeiten eine Werkzeugvollzähligkeitskontrolle durchgeführt wird, um zu vermeiden, dass ein Werkzeug an der Bearbeitungsstelle vergessen wird.

Die Werkzeugausgabe eines größeren Betriebes funktioniert häufig noch auf herkömmliche Weise, nämlich so, dass die Werkzeuge an einem möglichst zentralen Ort, der nur dem Personal der Ausgabe zugänglich ist, gelagert sind und auch meist dort gewartet werden. Jeder Handwerker erhält eine bestimmte größere Anzahl mit seiner Kennziffer versehener sogenannter Werkzeugmarken.

Für jedes Werkzeug, das der Handwerker aus der Ausgabe benötigt, muss er am Ausgabeschalter dem Ausgeber zuvor eine Werkzeugmarke als Pfand übergeben, welche dieser meist am Platz des entnommenen Werkzeugs aufbewahrt. Bei der Rückgabe des nicht mehr benötigten Werkzeuges wird dieses vom Ausgeber überprüft. Erst bei unbeanstandetem Zustand erhält der betreffende Handwerker seine Werkzeugmarke zurück.

Nachteilig an diesem geübten Verfahren ist, dass die Werkzeugausgabe, um ihre Funktion geordnet zu erfüllen, immer mit mindestens einer zuverlässigen, sachkundigen Person besetzt sein muss. Auch wenn z.B. bei Reparaturarbeiten in der produktionsfreien Zeit nur wenige Handwerker anwesend sind.

Um bei der derzeitigen Anordnung Personal zu sparen, besteht die Neigung, die Werkzeuge auf möglichst wenige Ausgabeorte zu konzentrieren. Zweckmäßig ist es jedoch, das Werkzeug unmittelbar dort kontrolliert aufzubewahren, wo es gebraucht wird.

Die oft weiten Wege und die umständliche Handhabung zu bzw. an den Werkzeugabgaben verleitet die Handwerker dazu, sich mehr eigenes Werkzeug, oft sogar Spezialwerkzeug, zu beschaffen und in ihrem Werkzeugschrank zu horten, als es für den Betrieb sinnvoll ist.

Außerdem ist eine genaue Kontrolle des Ausgabeablaufes erschwert.

Die erforderliche große Anzahl von Werkzeugmarken führt häufig zu deren Verlust oder Vertauschung, was ein Grund für Unordnung und unnötigem Ärger ist.

Nicht gemeldete Mängel an zurückgegebenen Werkzeugen können oft erst bei erneutem Gebrauch festgestellt werden. Das ergibt unnötige Verzögerungen und die Ermittlung des letzten Benutzers ist nur selten eindeutig möglich.

Zur Überwindung dieser Nachteile schlägt die Patentschrift DE 504 661 ein mechanisches Kontroll- und Auswahlsystem mittels Registrierschloss vor.

Mehrere Personen besitzen je einen Schlüssel gleicher Form zum Öffnen eines oder mehrerer abgeschlossener Räume bzw. zum Betätigen einer oder mehrerer Einrichtungen. Nachträglich soll nun leicht und eindeutig feststellbar sein, wer aus diesem Personenkreis welchen geschlossenen Raum bzw. welche Einrichtung, wenn notwendig zu welcher Uhrzeit, zuletzt oder überhaupt geöffnet bzw. betätig hat.

Teile der genannten Probleme lassen sich auch elektronisch lösen. So ist aus der DE 20 2009 010 425 U1 ein Werkzeugvorhaltesystem bekannt, bestehend aus einer Einheit zur Aufnahme von Werkzeugen sowie mit RFID-Elementen versehenen Werkzeugen und wenigstens einer RFID-Leseeinheit, wobei zu einem vorgegebenen Zeitpunkt durch die RFID-Leseeinheit der Bestand des an der Aufnahmeeinheit befindlichen Werkzeugs aufgenommen und mit einem Sollbestand verglichen wird.

Zur besseren Raumausnutzung sind auch Lagerregalsysteme zur Lagerung von Lagergut bekannt. Die DE 10 2010 35 231 B4 beschreibt ein solches Lagerregalsystem zur Lagerung von Lagergut. Dieses weist wenigstens eine Bedienöffnung zur Einlagerung und zur Entnahme von Lagergut auf. Das Lagersystem ist mit wenigstens einem Umlauf- oder Liftregallagersystem mit mehreren Lagerplätzen und einem Lagerregal ausgestattet, dass wenigstens eine Regalsäule mit übereinander angeordneten Lagerplätzen aufweist. Zusätzlich weist das Lagerregalsystem wenigstens eine Übergabevorrichtung zum Transport des Lagerguts von einem Lagerplatz des Lagerregals zur Übergabeöffnung und umgekehrt auf.

Zur weiteren Rationalisierung des Beschickungs- und Entnahmevorgangs wird in der DE 10 2012 102 076 A1 eine Beschickung- und/oder Entnahmevorrichtung eines automatisierten Lagersystems mit Lagergutträgern beschrieben. Des Weiteren wird ein Lager sowie ein Verfahren beschrieben, bei dem mit der Beschickung- und/oder Entnahmevorrichtung ein Lagergutträger durch Verschieben an einer Beschickungs- und/oder Annahmestelle eines automatisierten Lagersystems Lagergut zum Kommissionieren bereitgestellt wird. Das Lagersystem kann beispielsweise ein Lagerlift oder Paternoster-System sein, mit einer Beschickung-und/oder Entnahmeöffnung zum Ein- bzw. Auslagern von Lagergut in das oder aus dem Lagersystem.

Um in sicherheitsrelevanten Bereichen eine sichere, einfache, einheitlich durchgeführte, automatisch dokumentierte Verwaltung von Werkzeugen sicherzustellen, schlägt die DE 10 2011 001 076 A1 den Einsatz von RFID-Etiketten und -Lesegeräten vor.

Schließlich ist aus der DE 298 03 081 U1 eine steuerbare Lager- und Ausgabevorrichtung bekannt, die mindestens einen verriegelbaren Schrank aufweist, in dem Gegenstände, hinsichtlich ihres Ablageortes datenmäßig erfasst, abgelegt sind. Ein mit dem Schrank verbundener Rechner öffnet mittels eines Steuersignals nach Anforderung den Ablageort im Schrank und steuert eine Ausgabevorrichtung zur Ausgabe des Gegenstandes an.

Die Lagergutträger werden auch Tablare genannt.

Aufgabe der Erfindung ist es, ein Ein- und Ausgabekontrollverfahren und eine -Vorrichtung insbesondere für auf oder in Lagergutträgern gelagertes Gut, insbesondere unterschiedlicher Abmessungen, vorzuschlagen, das bei bestehenden Lagersystemen auch nachgerüstet werden kann und eine automatische Lagerbestandsführung und automatisierte Ein- und Auslagerungsprotokollierung ermöglicht, sowie ein damit ausgerüstetes automatisches Lagersystem anzugeben.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.
[A1] Die Lösung der Aufgabe gelingt bei einer Vorrichtung zur Ein- und Ausgabekontrolle für auf oder in Lagergutträgern gelagertes Gut, insbesondere unterschiedlicher Abmessungen, in Lagersystemen zur automatisierten Lagerbestandsführung, wenn oberhalb oder vor einer Beschickungs- und/oder Entnahmeöffnung wenigstens eine fest installierte den Lagergutträger automatisch erfassende Kamera vorgesehen ist und/oder ein den Lagergutträger abdeckendes Kontrolltablar mit einer Vielzahl von ver- und entriegelbaren Verschlüssen, wie z.B. Klappen, Schiebern oder Blenden, vorgesehen ist, die von einer Steuerung selektiv ansteuerbar sind.

Alternativ oder in Kombination wird somit eine auf dem Lagergutträger stattfindende Änderung eines Lagerbestands optisch und/oder elektromechanisch erfasst.

Optisch wird bei jedem Ein- oder Ausfahren eines Lagergutbehälters in oder aus der Beschickungs- und/oder Entnahmeöffnung automatisch ein Foto aufgenommen und abgespeichert. Danach wird das auf dem Lagergutträger befindliche Lagergut durch bekannte geeignete Bilderkennungsprogramme nach Art und Anzahl identifiziert. Durch einen vorher/nachher-Vergleich wird auf eine Lagerbestandsveränderung geschlossen, die zur Fortschreibung des aktuellen Lagerbestands herangezogen wird.

Die Beschickung mit bzw. die Entnahme von Lagergut kann auch mit Hilfe einer auf einem Smartphone gespeicherten App, d.h. einem Programm zur Artikelverwaltung erfolgen. Dazu meldet sich das Smartphone zur Prüfung seiner Berechtigung bei der Steuerung des Lagersystems an. Wenn die Steuerung eine für den auszuführenden Lagervorgang ausreichende Berechtigung feststellt, kann über das Smartphone auf die Artikelliste und die zugeordneten Lagerorte zugegriffen werden und ein Befehl auf den Zugriff zu einem bestimmten Lagerort auf einem Lagergutträger gegeben werden. Anschließend fährt das Lagersystem den angewählten Lagergutträger in den Zugriffsbereich durch die Beschickungs- und/oder Entnahmeöffnung.

Fotos können sowohl beim Ausfahren aus als auch beim Einfahren in die Beschickungs- und/oder Entnahmeöffnung angefertigt werden, um den Bestand auf dem Lagergutträger zu ermitteln. Grundsätzlich reicht eine einzige Aufnahme bei jedem Transportvorgang, um die Veränderung festzustellen, um die Artikelverwaltung auf dem aktuellen Stand zu halten. Das Foto sollte vorzugsweise beim Rücklagern des Lagergutträgers in den Turm angefertigt werden.

Um Entnahmefehler zu vermeiden, kann beim Rücklagern ein Vergleich mit dem Anforderungsbefehl erfolgen. Sollte sich eine Diskrepanz beispielsweise zwischen dem angeforderten und tatsächlich entnommenen Artikel ergeben, wird eine Fehlermeldung ausgegeben und das Rücklagern des Lagergutträgers von der Steuerung verweigert werden.

Zur Vermeidung von Entnahmefehlern kann ergänzend ein mittels Spiegeln gesteuerter Lichtstrahl auf den zu entnehmenden Artikel zeigen.

Bei der Herstellung der Verbindung des Smartphones zur Steuerung des Lagersystems wird der aktuelle Lagerbestand zum Smartphone übertragen und steht somit jedem berechtigtem Nutzer zur Anwahl zur Verfügung.

Alternativ oder in Ergänzung zur optischen Artikelerkennung und/oder zur Vermeidung von Zugriffsfehlern kann erfindungsgemäß ein elektromechanisches Kontrolltablar eingesetzt werden. Der Zugriff auf das Lagergut ist dann nur mittels eines Durchgriffs durch das Kontrolltablar möglich.

Da für einen Zugriff auf das Lagergut immer ein Verschluss zu öffnen ist, kann die Zustandsänderung vorteilhaft einfach als Hinweis auf einen Lagerzugriff dienen, der automatisch als Signal in die Steuerung gelangt und von einem Rechner zur Bestandsveränderung genutzt werden kann. Durch entsprechende Verriegelungen können gezielt Zugriffsrechte auf bestimmte Lagergüte einzelnen Zugriffsberechtigten zugeteilt werden. Die Verriegelungen der Verschlüsse werden von einer Steuerung selektiv ver- und entriegelt. Als Verschlüsse können Klappen, Schieber, Türen, Rollvorhänge etc. dienen.

Diese Verschlüsse können entweder horizontal oder vertikal angeordnet werden, je nachdem in welcher Ebene die Öffnung des Lagergutträgers liegt. Bei Lagergut, das auf Tablaren gelagert ist, ist sind die Verschlüsse horizontal angeordnet. Bei vertikal übereinander angeordneten Fächern, beispielsweise bei Warenabgabeautomaten oder Paketeinlagerungsboxen, wird man die Verschlüsse vertikal anordnen.
[A2] Zu diesem Zweck ist mit Vorteil in Ausgestaltung der Erfindung vorgesehen, dass die Verschlüsse des Kontrolltablars einen Zustandssensor und einen elektrisch betätigten Riegel aufweisen. Dieser Riegel kann von der Steuerung einzelnen oder gruppenweise in seinem Zustand verändert werden.
[A3] In weiterer Ausgestaltung der Erfindung ist vorgesehen, dass den Verschlüssen eine Steuerung zugeordnet ist, zur Protokollierung von Signalen des Zustandssensors und/oder zum Betätigen des Riegels. Die Protokollierung der Zustandsänderung kann zu einer automatischen Lagerbestandsführung vorteilhaft benutzt werden. Auch nachträglich kann durch die Protokollierung jede Bestandsveränderung rekonstruiert werden.
[A4] Wenn in weiterer Ausgestaltung jeder Verschluss ein mechanisches Schloss aufweist und/oder eine Anzeige zur Kennzeichnung eines Riegelzustandes vorgesehen ist, können auch bestimmte Bereiche mechanisch verschlossen und dem Zugriff der Steuerung entzogen oder notgeöffnet werden. Die Anzeige des Riegelzustands erleichtert den Nutzern zu erkennen, welche Klappe bzw. welche Verschlüsse zu öffnen sind, um auf das Lagergut zugreifen zu können.
[A5] Die Maßnahme, dass mindestens zwei Verschlüsse in einem gemeinsamen Rahmen gelagert sind, ermöglicht den Zugriff auf einen größeren Bereich, ohne mehrere Verschlüsse einzeln öffnen zu müssen. Mit einem Griff kann der Rahmen mit allen darin gelagerten Verschlüssen geöffnet werden. Der Rahmen selbst kann klappbar oder verschiebbar ausgebildet sein. Der Rahmen übernimmt somit als Ganzes die Funktion eines Verschlusses.
[A6] Mit Vorteil kann auch auf noch größere Bereiche zugegriffen werden, wenn mindestens zwei Rahmen in einem größeren Rahmen gelagert sind, der als Ganzes öffenbar oder schließbar, vorzugsweise klappbar ausgebildet ist.
[A7] Damit der Rahmen als Ganzes von der Steuerung anzusteuern ist, ist es vorgesehen, dass auch die Rahmen elektrisch betätigbare Riegel aufweisen.
[A8] Dadurch, dass die Anzahl der Verschlüsse eine Potenz der Zahl 2 beträgt und/oder die Größe des Verschlusses einer Größe eines kleinsten Lagergutbehälters entspricht, kann eine leichte Standardisierung der Teile erfolgen. Es sind nur wenige Größen erforderlich, um unterschiedlichen Bedürfnissen gerecht werden zu können.
[A9] Wenn die Steuerung eine Schnittstelle zu einer übergeordneten Steuerung z. B. des Lagersystem aufweist, kann eine Weitergabe der Daten an ein ERP-System erfolgen und mit Vorteil eine automatische Lagerbestandsführung für die Auslösung automatischer Nachbestellungen genutzt werden.
   Alternativ oder in Ergänzung der Schnittstelle zu einer übergeordneten Steuerung kann mit Vorteil kann die Steuerung des Lagersystems eine Schnittstelle zu einem auf einem mobilen Computer installierten Programm aufweisen. Dabei handelt es sich in der Praxis meist um ein Tablett oder Smartphone. Jeder Lagerbewegung kann so über das Smartphone ein Berechtigter zugeordnet werden und die Vorgänge können protokolliert werden.
   Bei der Schnittstelle kann es sich beispielsweise um eine WLAN oder Blue Tooth Schnittstelle handeln, so dass auch mehrere Lagersysteme und deren Steuerungen vernetzt werden können. Die zentrale Einsicht in die aktuellen Lagerbestände wird dadurch jederzeit möglich.
[A10] Die Aufgabe wird auch durch ein Verfahren zur Ein- und Ausgabekontrolle für auf oder in Lagergutträgern gelagertes Gut, insbesondere unterschiedlicher Abmessungen, zur Nachrüstung bei bestehenden Lagersystemen zur automatisierten Lagerbestandsführung und automatisierten Ein- und Auslagerungsprotokollierung gelöst, bei dem eine Beschickungs- und/oder Entnahmeöffnung zu einem Lagergutträger mittels eines abdeckenden Kontrolltablars abgedeckt wird und ein Zugang nur durch eine Vielzahl von Verschlüssen gewährt wird, die von einer Steuerung programmgesteuert ver- oder entriegelt werden, und/oder bei jedem Ein- bzw. Auslagern ein Bild des Lagergutträgers aufgenommen und abgespeichert wird und mittels Bilderkennung eine Bestandsveränderung des Lagergutes festgestellt wird. Mit üblichen Bilderkennungsprogrammen lässt sich jeder Lagergutträger nach Art, Anzahl und Ort auf dem Lagergutträger identifizieren. Durch Vergleich sequenziell aufgenommener Bilder desselben Lagergutträgers lassen sich somit Bestandsveränderungen sicher ermitteln und falsche Artikel ansteuern.
[A11] In Ausgestaltung des Verfahrens ist vorgesehen, dass mehrere Verschlüsse und/oder Rahmen synchron ver- oder entriegelt werden. Dadurch kann die Größe der Zugriffsöffnung auf ein Lagergut oder einen Lagergutbehälter an die Abmaße des Lagergutes angepasst werden.
[A12] Schließlich löst die Aufgabe auch ein automatisches Lagersystem, wie beispielsweise ein Lagerlift oder ein Paternoster-System, mit Beschickungs- und/oder Entnahmeöffnungen zum Ein- bzw. Auslagern von auf Lagergutträgern, insbesondere in Lagergutbehältern, gelagerten Lagergütern, wenn oberhalb oder vor den Beschickungs- und/oder Entnahmeöffnungen der Lagergutbehälter eine fest installierte Kamera vorgesehen ist, die bei jedem Ein- bzw. Auslagern selbsttätig ein Bild des Lagergutträgers aufnimmt und abspeichert und/oder wenigstens ein den Lagergutträger abdeckendes Kontrolltablar mit einer Vielzahl von ver- und entriegelbaren Verschlüsse vorgesehen ist.

Eine bevorzugte Ausführungsform der Erfindung wird beispielhaft anhand einer Zeichnung erläutert. Die Figuren der Zeichnung zeigen im Einzelnen:
- Figur 1: Schematische Darstellung eines erfindungsgemäßen Lagersystems,
- Figur 2: eine perspektivische Ansicht eines Kontrolltablars mit Klappen als Verschlüsse,
- Figur 3: eine schematische Frontansicht eines Lagerturms mit Kontrolltablar und Lagergutträger,
- Figur 4: eine Ansicht des Lagerturms gemäß Figur 1 mit Lagergutträger unter Kontrolltablar,
- Figur 5: eine Ansicht des Lagerturms gemäß Figur 1 mit Lagergutträger unter Kontrolltablar mit Anzeige einer entriegelten Klappe als Verschluss,
- Figur 6: eine Ansicht des Lagerturms gemäß Figur 1 mit Lagergutträger unter Kontrolltablar mit geöffneter Klappe,
- Figur 7: eine Ansicht des Lagerturms gemäß Figur 1 mit Lagergutträger unter Kontrolltablar mit geöffneter Klappe,
- Figur 8: eine Ansicht des Lagerturms gemäß Figur 1 mit Lagergutträger im Lagerturm,
- Figur 9: eine Aufsicht auf das Raster von Lagergutbehältern und
- Figur 10: eine perspektivische Ansicht eines Kontrolltablars mit Schiebern als Verschluss.

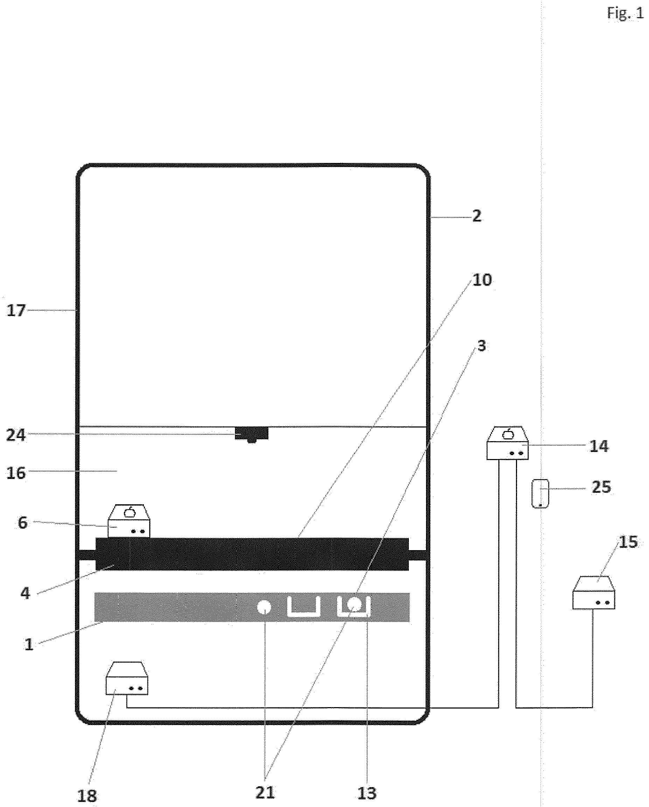

In Figur 1 bezeichnet die 2 ein Lagersystem, das als Lagerturm 17 ausgelegt ist. Lagertürme bieten dank der Ausschöpfung der zur Verfügung stehenden Raumhöhen größtmögliche Kapazitäten auf minimaler Stellfläche. Die Lagerung im vollautomatisierten Hochregallager bietet zahlreiche Vorteile, die die tägliche Arbeit im Betrieb erleichtern. Durch das "Ware zur Person"-Prinzip müssen die Artikel nicht länger herbeigeschafft werden, sondern werden auf Knopfdruck zugeführt.

Der Lagerturm ermöglicht einen kontrollierten Zugriff auf einzelne Lagergutträger 1, die auch als Tablare bezeichnet werden. Diese können einzeln bis zu 500 kg tragen.

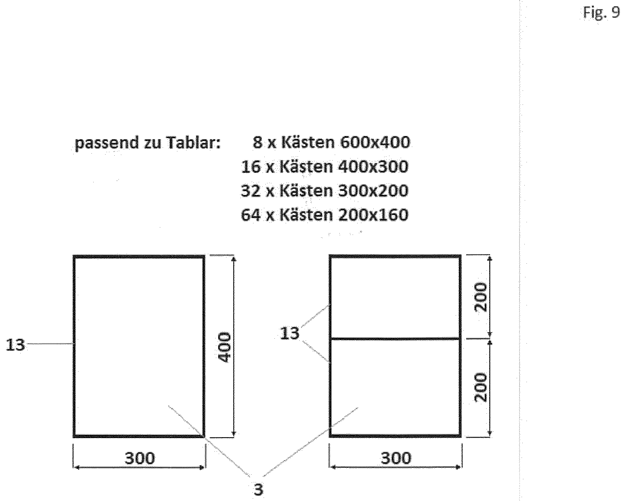

Mit einer Tiefe von üblicherweise 813 mm ist ein Zugriff zu allen Bereichen des Tablars, auf denen Lagergutbehälter 13 (Figur 9) mit Beschickungs- und/oder Entnahmeöffnung 3 stehen, einfach, übersichtlich und ergonomisch leicht. In einer Rasterung von ca. 50 mm können je nach Höhe des Lagergutes diese Tablare innerhalb des Turmes 17 übereinander gestapelt abgelegt werden.

Solche modularen Lagerturmlösungen sind in sich geschlossene Systeme, bei denen die Tablare an beiden Seiten der Geräte vertikal übereinander eingelagert sind. In der Mitte befindet sich ein Extractor, der die Tablare mit dem Lagergut auf Knopfdruck automatisch zur Bedienöffnung 16 befördert.

Mithilfe von Sensoren wird die Höhe und das Gewicht jedes Tablars automatisch eingelesen, so dass dem Tablar die ideale Lage zugewiesen wird, so dass Überlasten sowohl auf dem Tablar als auch im Lagerturm vermieden werden. Diese Technologie ermöglicht es, Gegenstände mit unterschiedlichsten, das heißt von der kleinsten Schraube bis zum voluminösen Werkstück, effizient, sicher und platzsparend in einem Gerät zu lagern. Eine Steuerung mit leicht bedienbarer Software und optionaler Schnittstelle zur Integration in einem ERP System ermöglicht die Anbindung an übergeordnete Rechner oder an mobile Datenverarbeitungssysteme, wie beispielsweise Smartphones oder Tablets.

In Figur 1 ist oberhalb des dargestellten Lagergutträgers 1 das erfindungsgemäße Kontrolltablar 4 gezeigt, das zunächst den freien Zugriff auf die Beschickung- und/oder Entnahmeöffnung 3 der Lagergutbehälter 13 verhindert. Von den Lagergutbehältern 13 sind nur zwei schematisch angedeutet. Das Lagergut 21 kann auch ohne Lagerbehälter 13 auf dem Lagergutträger 1 abgelegt sein.

Das erfindungsgemäße Kontrolltablar 4 steht mit einer Steuerung 6 in Verbindung, die ihrerseits mit einer Schnittstelle 14 drahtlos kommuniziert. Die Schnittstelle 14 dient dazu, in die Liftsteuerung 18 des Lagersystems 2 einzugreifen. Zusätzlich ist über die Schnittstelle 14 auch eine Verbindung zu einer übergeordneten Steuerung 15 möglich, die ihrerseits auch Aufgaben innerhalb eines ERP Systems übernehmen kann.

Alternativ zum Kontrolltablar 4 oder als Ergänzung kann eine fest installierte Kamera 24 so angebracht sein, dass sie den Lagergutträger 1 erfassen kann. Bei jedem Transportvorgang eines Lagergutträgers in und/oder aus dem Zugriffsbereich durch die Bedienöffnung 16 nimmt die Kamera ein aktuelles Bild des Lagergutträgers 1 auf. Durch Vergleich der beiden Bilder kann die Veränderung auf dem Lagergutträger 1 erfasst werden und als Bestandsänderung in die Artikelverwaltung des Lagersystems eingepflegt werden. Zu diesem Zweck werden die Bilder zuvor mittels bekannter Bildverarbeitungssoftware entsprechend so aufbereitet, dass das Lagergut beispielsweise nach Artikeln, Anzahl und Lage auf dem Lagergutträger 1 identifizierbar ist.

Nach Auswertung der Bilder können die Ursprungsbilder aus dem Speicher gelöscht werden und nur das Auswerteergebnis gespeichert werden. Dadurch wird die zu speichernde Datenmenge vorteilhaft reduziert.

Das in Figur 1 schematisch dargestellte Smartphone 25 steht für einen mobilen Computer, wie z.B. ein Tablet oder ein Samrtphone mit einer App, über das sich der jeweilige Bediener bei der Steuerung anmelden und identifizieren kann. Ein in der Software integriertes Rechtemanagement prüft bei bestimmten Lagervorgängen zunächst die Berechtigung für den gewünschten Zugriff und gibt erst dann den Befehl an die Steuerung frei, wenn eine ausrechende Berechtigung nachgewiesen werden kann.

Die Zugriffshistorie für bestimmte Artikel und/oder Personen und/oder Lagerorte lässt sich so auch für rückliegende Zeiträume aus den gespeicherten Daten entnehmen, beispielsweise durch entsprechende Filterung. Dadurch lässt sich mit Vorteil der Betrieb des Lagers optimieren, z.B. indem besonders häufig zugegriffene Artikel auf Lagergutträgern in der Nähe der Bedienöffnung 16 konzentriert werden, um Transportzeiten bzw. Zugriffszeiten zu minimieren.

Der Zugriff auf das Lagersystem kann somit über das auf dem Smartphone gespeicherte Programm gesteuert werden. Über kabellose Wirkverbindungen, wie sie z.B. ein WLAN oder Blue Tooth darstellen, lässt sich besonders günstig die Verbindung zur Steuerung 18 des Lagersystems verwirklichen.

Da mit diesem System bereits eine automatische Artikelverwaltung möglich ist, kann das erfindungsgemäße Kontrolltablar 4 dazu dienen, um Fehlzugriffe zu vermeiden. Es wird durch die Verschlüsse nur der Artikel auf dem Lagergutträger 1 freigegeben, der tatsächlich auch angewählt wurde.

Alternativ kann auch durch die Software und die Bilderkennung diese Prüfung vorgenommen werden und Fehlzugriffe können erkannt und verhindert werden, indem beispielsweise der Fehler angezeigt wird und/oder der Transport des Lagergutbehälters bei Fehlzugriff von der Steuerung verweigert wird.

Die oben beschriebenen einzelnen Funktionen können an verschiedenen Orten in das System integriert werden. Grundsätzlich ist es weitgehend dem Fachmann überlassen, ob er die Funktionen in dem Programm auf dem mobilen Rechner 24, in der Steuerung 18 des Lagersystems in der Schnittstelle 14 oder dem übergeordneten Rechner 15 realisiert. Dasselbe trifft auf den Ort oder die Art der gespeicherten Daten zu.

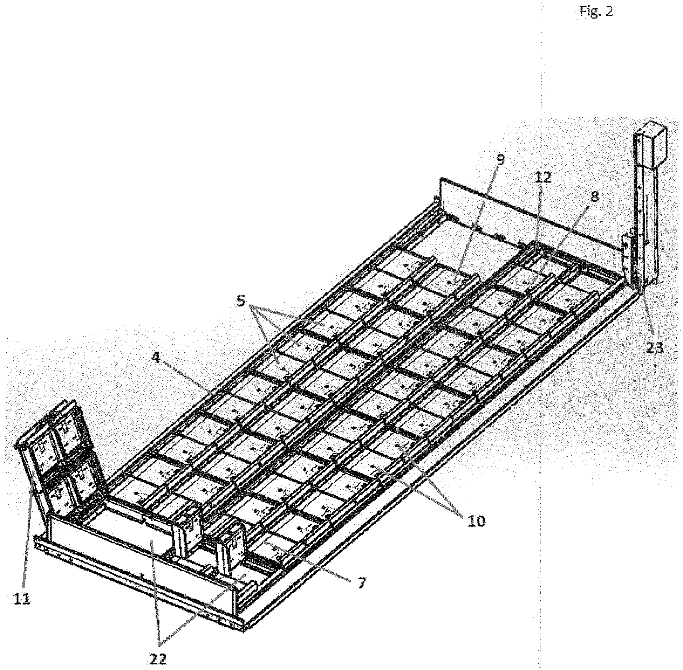

In Figur 2 ist in perspektivischer Ansicht das erfindungsgemäße Kontrolltablar 4 perspektivisch dargestellt. Um Zugriff auf das Lagergut zu erhalten, muss durch dieses Kontrolltablar 4 hindurchgegriffen werden können. Zu diesem Zweck sind im dargestellten Fall insgesamt vier Reihen mit je sechszehn Klappen 19 als Verschlüsse 5, also insgesamt 64 Klappen vorgesehen. Zunächst sind diese Klappen 19, d.h. die Verschlüsse 5, in geschlossenem Zustand mittels eines Riegels 8 verriegelt und deshalb nicht zu öffnen. Erst nachdem der Riegel 8 von der Steuerung 6 entriegelt wurde, lässt sich die Klappe19 bzw. der Verschluss 5, dessen Zustandsänderung mittels einer Leuchtdiode als Anzeige 10 angezeigt wird, öffnen. Der Zugriff auf das Lagergut 21 ist dann durch Öffnung 22 hindurch freigegeben. Dabei protokolliert ein an geeigneter Stelle angeordneter Sensor 7 die Zustandsänderung der Klappe 5. Nach der Entnahme des Lagergutes, das beispielsweise mittels eines RFID-Etiketts bei der Entnahme zusätzlich identifiziert werden kann, wird dieser Vorgang über die Steuerung 14 an die übergeordnete Steuerung 15 gemeldet, so dass der gespeicherte Lagerbestand nach Schließen der Klappe 19 bzw. des Verschlusses 5 entsprechend geändert werden kann. In entsprechender Weise wird bei der Beschickung des Lagers, das heißt bei der Einlagerung von Artikeln als Lagergut in das Lagersystem, verfahren.

Zur Verdeutlichung des Tablaraufbaus sind einige der Klappen 19 bzw. der Verschlüsse 5 und/oder Rahmen 11, 12 weggelassen und mehrere Klappen 19 und Rahmen 11, 12 im geöffneten Zustand dargestellt. Dies entspricht nicht dem tatsächlichen Bild bei erfindungsgemäßer Verwendung.

Über ein in einer Ecke des Tablars vorgesehenes Anschlussterminal 23 wird die Verbindung zur Steuerung und zur elektrischen Versorgung hergestellt.

Da die Lagergutbehälter unterschiedliche Maße aufweisen, um sie an das eingelagerte Lagergut anpassen zu können, muss der Zugriff auch auf größere Lagerbehälter möglich sein, die die Klappen- bzw. Verschlussmaße überschreiten. Zu diesem Zweck sind die einzelnen Klappen 19 bzw. Verschlüsse 5 auch in Rahmen 12 klappbar gehalten. Die Rahmen 12 sind ihrerseits wieder in größeren Rahmen 11 klappbar gehalten, so dass jeweils eine Verdoppelung der Fläche der Zugriffsöffnung bzw. der funktionalen Klappe möglich ist. Auf dem gleichen Tablar, d.h. Lagergutträger, lassen sich somit unterschiedliche Größen von Lagergut einlagern. Das Muster der Lagergutverteilung wird für jedes Tablar 1 in der Steuerung 14 gespeichert. Beim Zugriff auf ein spezielles Lagergut kann somit die zutreffende Gruppe von Verschlüssen gemeinsam angesteuert werden, indem der jeweilige größere Rahmen freigegeben wird.

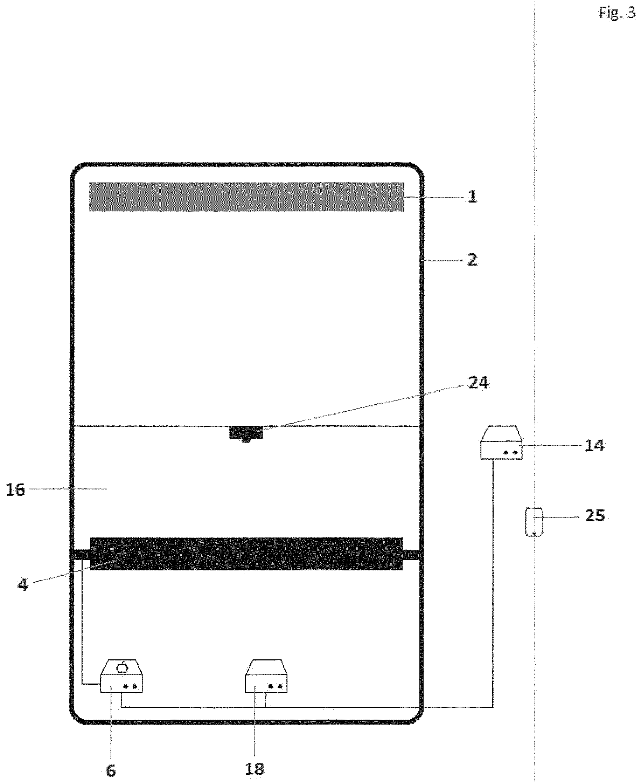

Die Figuren 3 bis 8 zeigen die einzelnen Schritte.

In Figur 3 ist zunächst ein beliebiges Tablar in seiner Parkposition oben im Lagerturm dargestellt. Nach Anforderung des Hostsystems, d.h. des übergeordneten Rechners 15 oder Initiierung eines Anforderungsbefehls, beispielsweise mittels eines Smartphones, wird über die Schnittstelle 14 der Transport des Tablars 1 unter das erfindungsgemäße Kontrolltablar 4 veranlasst. Außerdem wird der Befehl zur Entriegelung einer bestimmten Klappe 19, bzw. eines Verschlusses 5, gegeben.

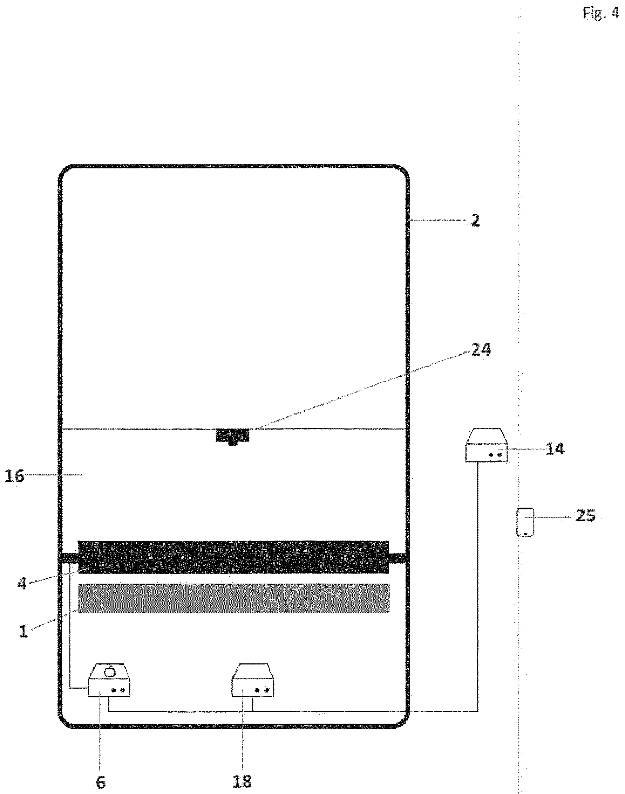

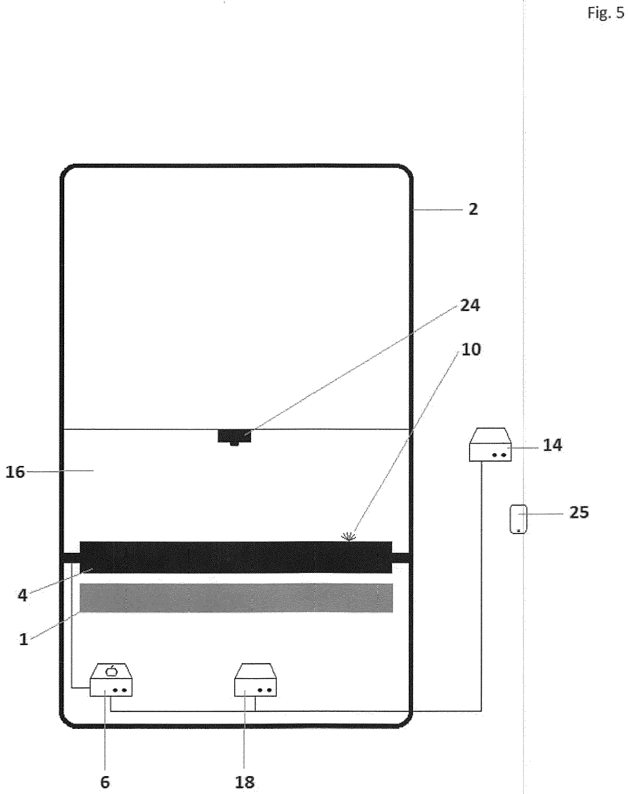

In Figur 4 ist der Zustand nach Transport des Tablars 1 unter das Kontrolltablar 4 gezeigt. Ein Zugriff durch das Kontrolltablar auf den Lagergutträger 1 ist zunächst solange verhindert, bis die Anzeige 10, d.h. beispielsweise eine LED, leuchtet und anzeigt, dass die angewählte Klappe entriegelten ist, was in Figur 5 gezeigt ist.

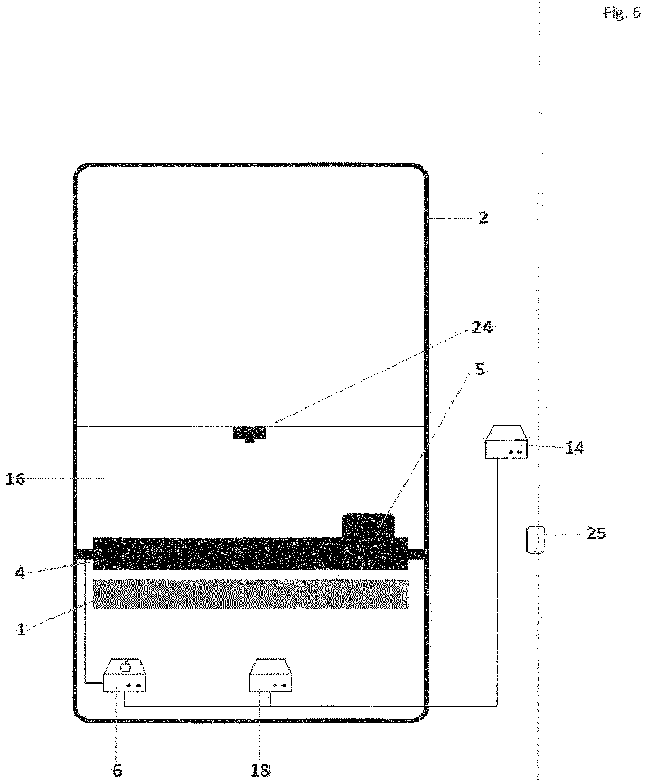

In Figur 6 wird die Klappe 19 bzw. der Verschluss 5 manuell geöffnet. Die Steuerung 6 meldet dabei über die Schnittstelle 14 an den übergeordneten Rechner, dass die Klappe geöffnet wurde und damit auch der Zugriff auf das darunter befindliche Lagergut 21 auf Lagergutträger 1 frei ist.

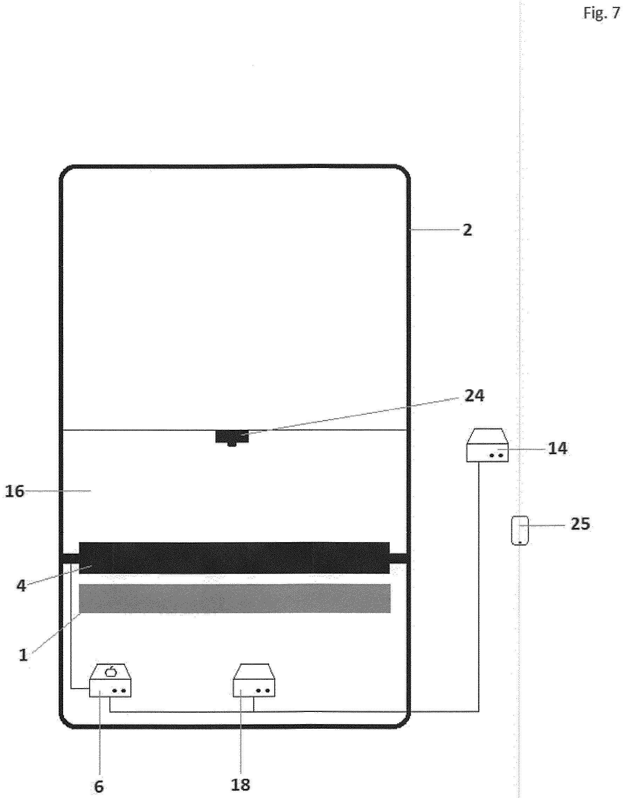

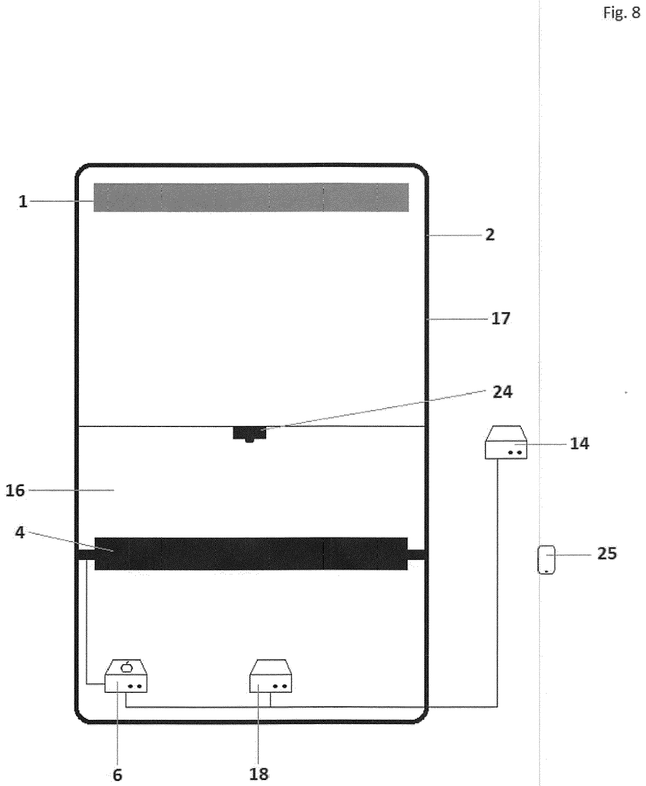

Sobald der Verschluss 5, d.h. die Klappe 19, wieder geschlossen ist, wird, wie in Figur 7 gezeigt, auch diese Zustandsänderung über die Schnittstelle 14 von der Steuerung 6 an das Hostsystem weitergeleitet. Außerdem erhält die Liftsteuerung 18 vom Hostsystem über die Schnittstelle 14 den Befehl, das Tablar 1 umzulagern. Dies kann ein Transport an einen beliebigen freien Platz im Lagersystem bedeuten oder auch wieder der in Figur 8 gezeigte ursprüngliche Platz des Lagergutträgers 1 sein.

Figur 8 zeigt somit den Ursprungszustand wie in Figur 3, bei dem das Tablar wieder innerhalb des Lagerturmes 17 eingelagert ist. In der Liftsteuerung 18 kann auch für bestimmte Tablare der Zugriff durch vorgegebene nicht berechtigte Personen gesperrt werden. Somit können nur berechtigte Personen Tablare in den Ausgabebereich der Bedienöffnung 16 fahren.

In Ergänzung oder als Alternative zum Kontrolltablar 4 kann auch eine fest installierte Kamera 24 die Zugriffe auf Lagergutträger dokumentieren. Dazu wird beispielsweise vor und nach einem Zugriff auf einen Lagergutträger von der Kamera ein Bild des Lagergutträgers erstellt und mittels Bilderkennung werden die darauf befindlichen Artikel identifiziert. Durch Vergleich der Bilder ist folglich die durch den Zugriff erfolgte Bestandsänderung festzustellen. Diese kann dann zur automatischen Fortschreibung des Lagerbestands genutzt werden. Die Bilder können auf dem Weg eines Lagergutträgers von seinem Lagerort zur Bedienöffnung 16 oder auf seinem Rückweg irgendwo im Lagersystem aufgenommen werden. Am einfachsten kann die Kamera 24 oberhalb des Lagergutträgers 1 in der Bedienöffnung 16 angeordnet sein.

Figur 9 zeigt das System von Lagergutbehältern 13, die sich jeweils zu größeren Gruppen zu Einheiten gruppieren lassen. Die Ansteuerung der Verschlüsse 5 erfolgt entsprechend diesem System. Beispielsweise können auf einem Tablar, d.h. Lagergutträger 1 insgesamt 64 Kästen der Abmaße 200 x 150 mm gestellt werden. Alternativ können aber auch beispielsweise 32 Kästen der Abmaße 300 x 200 mm genutzt werden. Auch das Mischen von Kästen ist möglich.

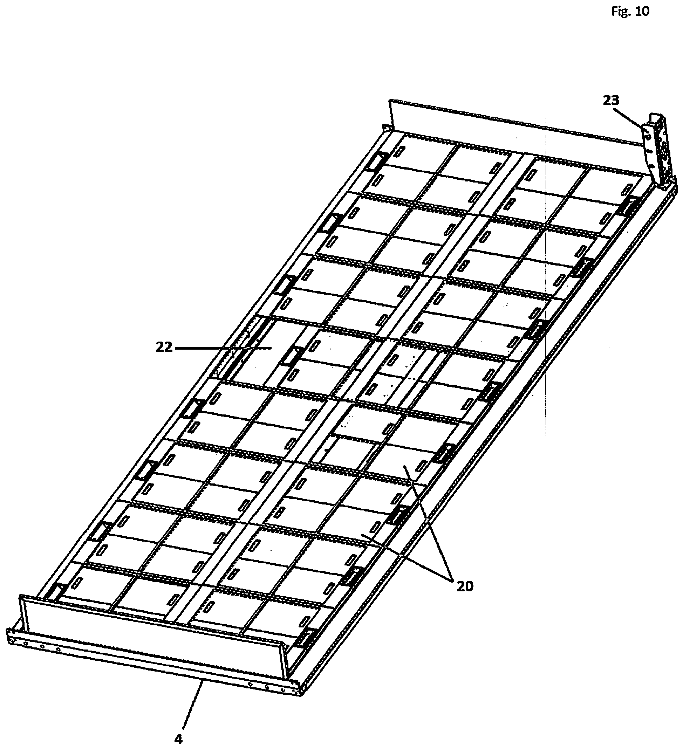

Figur 10 zeigt eine alternative Ausführungsform des Kontrolltablars gemäß Figur 2, bei dem statt Klappen 19 Schieber 20 als Verschlüsse 5 vorgesehen sind. Im Übrigen sind die Funktionen analog zu dem Tablar gemäß Figur 2 ausgebildet. Auch beim Tablar gemäß Figur 10 muss durch dieses Kontrolltablar 4 hindurchgegriffen werden können, um Zugriff auf das Lagergut zu erhalten. Zu diesem Zweck sind im dargestellten Fall insgesamt vier Reihen mit je sechszehn Schiebern 20, also insgesamt 64 Schieber vorgesehen. Zunächst sind diese Schieber 20, d.h. die Verschlüsse 5, geschlossenen. Sie sind im geschlossen Zustand nicht zu öffnen, weil sie mittels eines Riegels 8 verriegelt sind. Erst nachdem der Riegel 8 von der Steuerung 6 entriegelten wurde, lässt sich der Schieber 20, deren Zustandsänderung mittels einer Leuchtdiode als Anzeige 10 angezeigt wird, öffnen, so dass der Zugriff auf das Lagergut 21 freigegeben ist. Dabei protokolliert ein Sensor 7 die Zustandsänderung des Schiebers 20. Nach der Entnahme des Lagergutes, wird dieser Vorgang über die Steuerung 14 an die übergeordnete Steuerung 15 gemeldet, so dass der Lagerbestand nach Schließen des Schiebers 20 entsprechend geändert werden kann. In entsprechender Weise wird bei der Beschickung des Lagers, das heißt der Einlagerung von Artikeln verfahren.

Während wenigstens eine exemplarische Ausführungsform in der oben angegebenen Zusammenfassung und der vorangehenden ausführlichen Beschreibung dargestellt worden ist, sollte verstanden und festgehalten werden, dass eine große Anzahl von Variationen bzw. Modifikationen dazu existieren. Es sollte auch festgehalten werden, dass die exemplarische Ausführungsform oder die exemplarischen Ausführungsformen nur Beispiele sind und nicht dazu gedacht sind, den Umfang (bzw. Schutzumfang), die Anwendbarkeit oder den Aufbau der erfindungsgemäßen Einrichtung in irgendeiner Weise zu begrenzen.

### Bezugszeichenliste

- 1: Lagergutträger
- 2: Lagersystem
- 3: Beschickungs- und/oder Entnahmeöffnung
- 4: Kontrolltablar
- 5: Verschluss
- 6: Steuerung
- 7: Zustandssensor
- 8: Riegel
- 9: Schloss
- 10: Anzeige
- 11: Größerer Rahmen
- 12: Rahmen
- 13: Lagergutbehälter
- 14: Schnittstelle
- 15: übergeordnete Steuerung
- 16: Bedienöffnung
- 17: Lagerturm
- 18: Liftsteuerung
- 19: Klappe
- 20: Schieber
- 21: Lagergut
- 22: Öffnung
- 23: Anschlussterminal
- 24: Kamera
- 25: Smartphone

## Patentansprüche

1. Vorrichtung zur Ein- und Ausgabekontrolle für auf oder in Lagergutträgern (1) gelagertes Gut, insbesondere unterschiedlicher Abmessungen, in Lagersystemen (2) zur automatisierten Lagerbestandsführung, **dadurch gekennzeichnet, dass** oberhalb oder vor einer Beschickungs- und/oder Entnahmeöffnung (3) wenigstens eine fest installierte den Lagergutträger automatisch erfassende Kamera (24) vorgesehen ist und/oder ein den Lagergutträger (1) abdeckendes Kontrolltablar (4) mit einer Vielzahl von ver- und entriegelbaren Verschlüssen (5) vorgesehen ist, die von einer Steuerung (6) selektiv ansteuerbar sind.

2. Vorrichtung nach Anspruch 1, **dadurch gekennzeichnet, dass** die Verschlüsse (5) des Kontrolltablars (4) einen Zustandssensor (7) und einen elektrisch betätigten Riegel (8) aufweisen.

3. Vorrichtung nach Anspruch 2, **dadurch gekennzeichnet, dass** den Verschlüssen (5) eine Steuerung (6) zugeordnet ist, zur Protokollierung von Signalen des Zustandssensors und/oder zum Betätigen des Riegels (8).

4. Vorrichtung nach Anspruch 1, 2 oder 3, **dadurch gekennzeichnet, dass** jeder Verschluss (5) ein mechanisches Schloss (9) aufweist und/oder eine Anzeige (10) zur Kennzeichnung eines Riegelzustandes vorgesehen ist.

5. Vorrichtung nach einem oder mehreren der vorhergehenden Ansprüche, **dadurch gekennzeichnet, dass** mindestens zwei Verschlüsse (5) in einem klappbaren Rahmen (12) gelagert sind.

6. Vorrichtung nach Anspruch 5, **dadurch gekennzeichnet, dass** mindestens zwei Rahmen (12) in einem größeren Rahmen (11) gelagert sind, der als Ganzes öffenbar oder schließbar, vorzugsweise klappbar, ausgebildet ist.

7. Vorrichtung nach Anspruch 5 oder 6,**dadurch gekennzeichnet, dass** die Rahmen (11, 12) elektrisch betätigbare Riegel (8) aufweisen.

8. Vorrichtung nach einem oder mehreren der vorhergehenden Ansprüche, **dadurch gekennzeichnet, dass** die Anzahl der Verschlüsse (5) eine Potenz der Zahl 2 beträgt und/oder die Größe des Verschlusses einer Größe eines kleinsten Lagergutbehälters (13) angepasst ist.

9. Vorrichtung nach einem oder mehreren der vorhergehenden Ansprüche, **dadurch gekennzeichnet, dass** die Steuerung (6) eine Schnittstelle (14) zu einer übergeordneten Steuerung (15), z. B. des Lagersystems (2) aufweist und/oder eine Liftsteuerung (18) eine Schnittstelle zu einem auf einem mobilen Computer (24) installierten Programm aufweist.

10. Verfahren zur Ein- und Ausgabekontrolle für auf oder in Lagergutträgern gelagertes Gut, insbesondere unterschiedlicher Abmessungen, zur Nachrüstung bei bestehenden Lagersystemen zur automatisierten Lagerbestandsführung und automatisierten Ein- und Auslagerungsprotokollierung, **dadurch gekennzeichnet, dass** eine Beschickungs- und/oder Entnahmeöffnung zu einem Lagergutträger mittels eines abdeckenden Kontrolltablars abgedeckt wird und ein Zugang nur durch eine Vielzahl von Verschlüssen gewährt wird, die von einer Steuerung programmgesteuert ver- oder entriegelt werden, und/oder bei jedem Ein- bzw. Auslagern ein Bild des Lagergutträgers aufgenommen und abgespeichert wird und mittels Bilderkennung eine Bestandsveränderung des Lagergutes festgestellt wird.

11. Verfahren nach Anspruch 10, **dadurch gekennzeichnet, dass** mehrere Verschlüsse und/oder Rahmen synchron ver- oder entriegelt werden.

12. Automatisches Lagersystem, wie beispielsweise ein Lagerlift oder ein Paternoster-System, mit Beschickungs- und/oder Entnahmeöffnungen zum Ein- bzw. Auslagern von auf Lagergutträgern, insbesondere in Lagergutbehältern, gelagerten Lagergütern, **dadurch gekennzeichnet, dass** oberhalb oder vor der Beschickungs- und/oder Entnahmeöffnung eine fest installierte Kamera (23) vorgesehen ist, die bei jedem Ein- bzw. Auslagern selbsttätig ein Bild des Lagergutträgers aufnimmt und abspeichert und/oder wenigstens ein den Lagergutträger (1) abdeckendes Kontrolltablar (4) mit einer Vielzahl von ver- und entriegelbaren Verschlüssen (5) vorgesehen ist.
